Europäisches Patentamt

European Patent Office

Office européen des brevets

(19)

(11) Veröffentlichungsnummer: **0 251 271 B1**

(12) # EUROPÄISCHE PATENTSCHRIFT

(45) Veröffentlichungstag der Patentschrift: **08.01.92**

(51) Int. Cl.⁵: **B23K 3/02**

(21) Anmeldenummer: **87109319.1**

(22) Anmeldetag: **29.06.87**

---

(54) **Elektrischer Lötkolben.**

---

(30) Priorität: **01.07.86 DE 3621966**

(43) Veröffentlichungstag der Anmeldung:
**07.01.88 Patentblatt 88/01**

(45) Bekanntmachung des Hinweises auf die
Patenterteilung:
**08.01.92 Patentblatt 92/02**

(84) Benannte Vertragsstaaten:
**AT BE CH DE ES FR GB GR IT LI NL SE**

(56) Entgegenhaltungen:
**WO-A-80/00668**
**DE-A- 2 412 060**
**US-A- 4 086 465**

(73) Patentinhaber: **STANNOL Lötmittelfabrik Wilhelm Paff GmbH & Co. KG**
**Oskarstrasse 1-7**
**W-5600 Wuppertal 2(DE)**

(72) Erfinder: **Rehrmann, Herbert**
**Obere Bergerheide 3**
**W-5600 Wuppertal 1(DE)**
Erfinder: **Heinze, Hans-Joachim**
**Augustastrasse 59**
**W-5810 Witten(DE)**
Erfinder: **Dörr, Karl-Heinz**
**Tiegenhöfer Strasse 8**
**W-5603 Wülfrath(DE)**

(74) Vertreter: **Ludewig, Karlheinrich, Dipl.-Ing. et al**
**Patentanwälte Dipl.-Phys. Buse Dipl.-Phys. Mentzel Dipl.-Ing. Ludewig Unterdörnen 114**
**W-5600 Wuppertal 2(DE)**

## Beschreibung

Die Erfindung betrifft einen elektrischen Lötkolben, mit einem Heizelement mit einem Anschlußkabel, mit einem Handgriff, der in seinem Inneren eine Kammer aufweist, in die das Heizelement und das Anschlußkabel bereichsweise zur Befestigung eingeführt sind und in der durch Zwischenwände voneinander getrennt die einzelnen Anschlüsse zur elektrisch leitfähigen Verbindung zwischen Heizelement und Anschlußkabel liegen, und mit wenigstens einer schwenkbaren Klemmbacke, die an der Zwischenwand angeformt ist, wobei das Anschlußkabel gegen ein Herausziehen aus der Kammer durch ein als Zugentlastung dienendes Klemmteil und der Klemmbacke reibschlüssig gehaltert ist, und das Heizelement über eine Befestigungseinrichtung am Handgriff lösbar festgelegt ist.

Ein derartiges Gerät ist beispielsweise aus der Druckschrift WO 80/00668 bekanntgeworden. Das Gerät ist als ein Lötkolben ausgebildet. Heizelement und Anschlußkabel sind über Lötverbindungen verbunden, wobei die einzelnen Lötverbindungen in getrennten Abteilungen der Kammer des Handgriffes angeordnet sind. Zur Festlegung des Kabels ist eine Klemmbacke vorgesehen, die in der Gebrauchsstellung das Anschlußkabel gegen ein Klemmteil, nämlich einem Wandungsbereich der Kammer des Handgriffes drückt. Zur Festlegung des Heizelementes an dem Handgriff weist das Heizelement einen Teil auf, der mit einem umlaufenden Vorsprung versehen ist, der in eine entsprechende nutenförmige Vertiefung des Handgriffes eingreifen kann. Die Festlegung erfolgt dadurch, daß der Teil mit Heizelement in die Kammer des Handgriffes eingepreßt wird, bis der umlaufende Vorsprung in die eine Nut zu liegen kommt. Hierbei sind große Kräfte erforderlich. Eine Trennung von Heizteil und Handgriff ist auch möglich, indem der Befestigungsteil mit seinem umlaufenden Vorsprung aus der Nut herausgezogen wird. Auch hier sind, selbst bei kleiner Höhe des Vorsprunges große Kräfte (500 Kp) erforderlich, so daß derartige Lötkolben lediglich als Wegwerfkolben dienen können. Reparaturmöglichkeiten sind nicht gegeben. Von Nachteil bei diesen Lötkolben ist weiterhin, daß das Heizelement und mit den Lötanschlüssen verdreht werden kann, so daß gegebenenfalls ein Abscheren der Lötverbindung möglich ist, was zur Zerstörung des Lötkolbens aber auch zur einer sehr großen Unfallgefahr eines Benutzers führen kann. Die Montage derartiger Geräte ist verhältnismäßig aufwendig, da das Anschlußkabel beim Einführen in die Kammer des Handgriffes zunächst ohne Berührung mit der Klemmbacke liegt, so daß hierdurch die Montage wesentlich erschwert wird bzw. nur eine ungenügende Festlegung des Anschlußkabels gewährleistet wird.

Es ist zwar schon vorgeschlagen, daß als Klemmteil eine am Handgriff festgelegte Schraube dient, deren eines Ende fest gegen das Anschlußkabel geschraubt wird, wobei diese Zugentlastungsschraube besonders ausgebildet ist, um sicherzustellen, daß das Anschlußkabel bei Festdrehen der Schraube nicht beschädigt wird. Es hat sich aber gezeigt, daß derartige Schrauben leicht verlorengehen können. Von dem jeweiligen Benutzer werden dann unter Umständen Metallschrauben verwendet, durch die eine Gefahr der Kabelverletzung besteht, wobei es sogar möglich ist, daß die stromführenden Leitungen unmittelbar mit der Schraube in Verbindung treten können. Dies hat zur Folge, daß entweder ein Kurzschluß im Anschlußkabel auftritt oder die metallische Schraube unter Spannung steht, sobald der Lötkolben am Strom angeschlossen ist. Dies ist für einen Benutzer lebensgefährlich.

Aufgabe der Erfindung ist es daher, einen elektrischen Lötkolben der eingangs genannten Art so zu gestalten, daß zum einen die Zugentlastung sicher am Anschlußkabel angreift, ohne daß das Anschlußkabel beschädigt wird. Darüber hinaus soll der elektrische Lötkolben mit der Zugentlastung einen wohlfeilen Aufbau sowie eine einfache Montage aufweisen.

Dies geschieht erfindungsgemäß dadurch, daß die Zwischenwände zur Trennung der einzelnen Anschlüsse als eine Halterung für Verbindungsklemmen ausgebildet sind, an denen die Zuleitungen von Heizelement und Anschlußkabel zur Herstellung einer elektrisch leitfähigen Verbindung angeschlossen sind, daß an der Halterung mehrere Klemmbacken angeformt sind, die gleichmäßig um das Anschlußkabel herum verteilt angeordnet sind, daß über die Befestigungseinrichtung Heizelement, Halterung mit Klemmbacken in der Klemmkammer mit einer Verdrehsicherung festgelegt sind, und daß die Befestigungsvorrichtung Heizelement und Halterung durch ein Gewinde oder durch wenigstens eine federnde Lasche lösbar am Handgriff befestigt.

Um schon bei der Montage des elektrischen Lötkolbens auch ohne Klemmteil eine gewisse Zugentlastung zu erhalten, empfiehlt es sich, daß die Klemmbacken unter Vorspannung an das Anschlußkabel angreifen.

Um eine gute Führung der Klemmbacken zu erhalten, ist es günstig, wenn diese über einen als Biegestelle ausgebildeten, verdünnten Werkstoffbereich verschwenkbar gelagert sind. Durch diesen verdünnten Werkstoffbereich ist eine genaue Ausrichtung der Klemmbacken zum Anschlußkabel möglich, darüber hinaus ist über das Klemmteil eine sichere Festlegung gewährleistet.

Bei einem weiteren Ausführungsbeispiel der Erfindung ist das Klemmteil als Vorsprung an der Innenwandung der Kammer ausgebildet. Durch diese Ausbildung ist eine einfache Herstellung der Zugentlastung gegeben. Durch ein Verschieben der Klemmbacken in Richtung auf den Vorsprung wird dann das Anschlußkabel sicher in der Klemmkammer des Handgriffes festgelegt, da die Klemmbacke gegen das Kabel geschwenkt wird.

Günstigerweise ist an der Berührstelle zwischen Klemmbacke und Klemmteil an Klemmbacke und/oder Klemmteil eine Schrägfläche angeordnet, durch die die Klemmbacke bei ihrer Bewegung gegen das Klemmteil auf das Anschlußkabel zur reibschlüssigen Halterung schwenkbar ist.

Bei einem weiteren Ausführungsbeispiel der Erfindung weist die Klemmbacke an ihren dem Anschlußkabel zugewandten Seiten mehrere Rippen auf. Durch diese Rippen wird eine sichere, punktuelle reibschlüssige Halterung des Anschlußkabels gewährleistet. Vorteilhafterweise umgreifen die Klemmbacken und/oder die Rippen schalenförmig das Anschlußkabel bereichsweise, da so zum einen eine reibschlüssige Halterung gewährleistet ist und zum anderen auch eine Ausrichtung des Anschlußkabels bezüglich der Klemmbacken möglich ist.

Bei einem besonderen Ausführungsbeispiel der Erfindung ist ein Befestigungsteil der Befestigungseinrichtung für das Heizelement an der Halterung angeformt. Durch diese weitere Anformung wird die Herstellung und Montage des elektrischen Gerätes weiter vereinfacht, da nunmehr eine Vormontage mit dem Heizelement vorgenommen werden kann. Hierbei empfiehlt es sich, wenn das Heizelement durch Preßsitz an dem Befestigungsteil gehaltert ist, um so eine sichere und schnelle Verbindung zu erhalten. Sobald das Heizelement an dem angeformten Befestigungsteil befestigt ist, kann die Verdrahtung des elektrischen Lötkolbens erfolgen.

Um die Montage besonders zu vereinfachen, empfiehlt es sich, daß der Befestigungsteil der Befestigungseinrichtung einen Vorsprung trägt, der in eine Aussparung des Handgriffes zur Lagesicherung von Befestigungsteil, Halterung und Klemmbacke hinter einem Gegenvorsprung zu liegen kommt. Durch den Vorsprung ist in einfacher Weise sichergestellt, daß die Halterung im Inneren des Handgriffes über das angeformte Befestigungsteil festgelegt wird. Zugleich wird auch die Klemmbacke in ihrer Eingriffsstellung an dem Anschlußkabel in ihrer Lage gesichert, ohne daß befürchtet werden muß, daß sich die dadurch bewirkte Zugentlastung löst. Bei diesem Ausführungsbeispiel empfiehlt es sich den Gegenvorsprung an einer federnden Lasche anzuordnen, die in der Ausnehmung des Handgriffes vorgesehen ist, um so eine Austauschbarkeit bei Reparaturen zu ermöglichen. Durch einfaches Einschieben von Halterung und Heizelement in die Kammer des Handgriffes und das Einrasten des Vorsprunges hinter dem Gegenvorsprung ist Heizelement und Halterung am Handgriff befestigt.

Zur weiteren Montagevereinfachung empfiehlt es sich, daß der Befestigungsteil einen in Einführrichtung der Halterung in die Kammer verlaufenden Schlitz aufweist, in dem eine Rippe des Handgriffes eingreift, um so gezielt in einer einzigen Stellung Halterung mit Befestigungsteil ins Kammerinnere des Handgriffes einführen zu können. Darüber hinaus ist so sichergestellt, daß sich die Halterung sowie der Befestigungsteil gegenüber dem Handgriff nicht verdrehen können.

Der Schlitz hat darüber hinaus noch die weitere Aufgabe, eine am Heizelement festgelegte Führungszunge aufzunehmen, deren freies Ende in eine der Verbindungsklemmen befestigbar ist. Durch eine solche Führungszunge kann in einfacher Weise die Erdung des Heizleiters hergestellt werden, darüber hinaus kann über die Führungszunge eine zusätzliche Befestigung des Heizelementes an der Halterung erfolgen.

Auf der Zeichnung ist der Erfindungsgegenstand in einem Ausführungsbeispiel dargestellt, und zwar zeigen:

| Fig. 1 | einen Lötkolben, |
|---|---|
| Fig. 2 | die Halterung für die Verbindungsklemmen mit Klemmbacken für das Anschlußkabel, |
| Fig. 3 | eine Seitenansicht der Halterung und der Klemmbacken, |
| Fig. 4 | eine Rückansicht der Halterung und der Klemmbacken, |
| Fig. 5 | einen Schnitt durch die Halterung mit Klemmbacken, |
| Fig. 6 | einen Schnitt nach der Linie VI-VI der Fig. 5 durch die Klemmbacken, |
| Fig. 7 | die in einen Handgriff eingebaute Halterung für die Verbindungsklemmen mit Klemmbacken , |
| Fig. 8 | ein weiteres Ausführungsbeispiel eines Lötkolbens im Schnitt, |
| Fig. 9 | eine Draufsicht auf ein weiteres Ausführungsbeispiel der Halterung mit angeformter Klemmbacke sowie angeformtem Befestigungsteil, |
| Fig. 10 | im größeren Maßstabe ein Teil der Befestigungseinrichtung zur Festlegung der Halterung am Handgriff, |
| Fig. 11 | eine Schnitt nach der Linie XI-XI der Fig. 10 in kleinerem Maßstabe. |

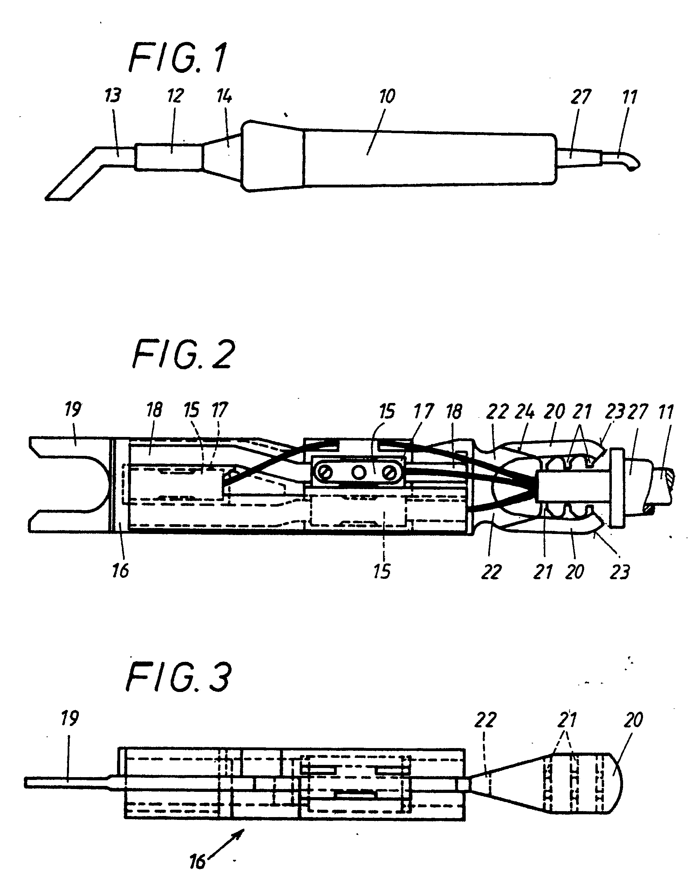

Der in Fig. 1 dargestellte Lötkolben besteht im wesentlichen aus folgenden Teilen: einem Handgriff 10, einem Anschlußkabel 11, einem Heizelement 12, einer Lötspitze 13 sowie einem das Heizelement 12 am Handgriff festlegenden Schraubteil 14.

Um das Anschlußkabel 11 an die Anschlüsse des Heizelementes 12 anschließen zu können, sind Verbindungsklemmen 15 vorgesehen, die an einer Halterung 16 in Aufnahmen 17 vorgesehen sind. Um die Zuleitungen von Anschlußkabel und Heizelement sicher zu den Verbindungsklemmen 15 führen zu können, weist die Halterung Kanäle 18 auf.

An dem einen Ende der Halterung 16 weist diese ein gabelförmiges Ende 19 auf, dessen Bedeutung später noch beschrieben wird. Am anderen Ende der Halterung sind federnde Klemmbakken 20 vorgesehen, die mit Rippen 21 am Anschlußkabel 11 angreifen. Die Klemmbacken sind, wie Fig. 3 zeigt, über einen verdünnten Werkstoffbereich 22 an der Halterung 16 angeformt. Wie aus Fig. 2 zu erkennen ist, erstrecken sich die Klemmbacken 20 in Richtung des Anschlußkabels 11.

Wie aus Fig. 2 weiter hervorgeht, weisen die freien Enden der Klemmbacken Schrägflächen 23 auf. Diese Schrägflächen sind so angeordnet, daß sie in Richtung des Anschlußkabels weisen.

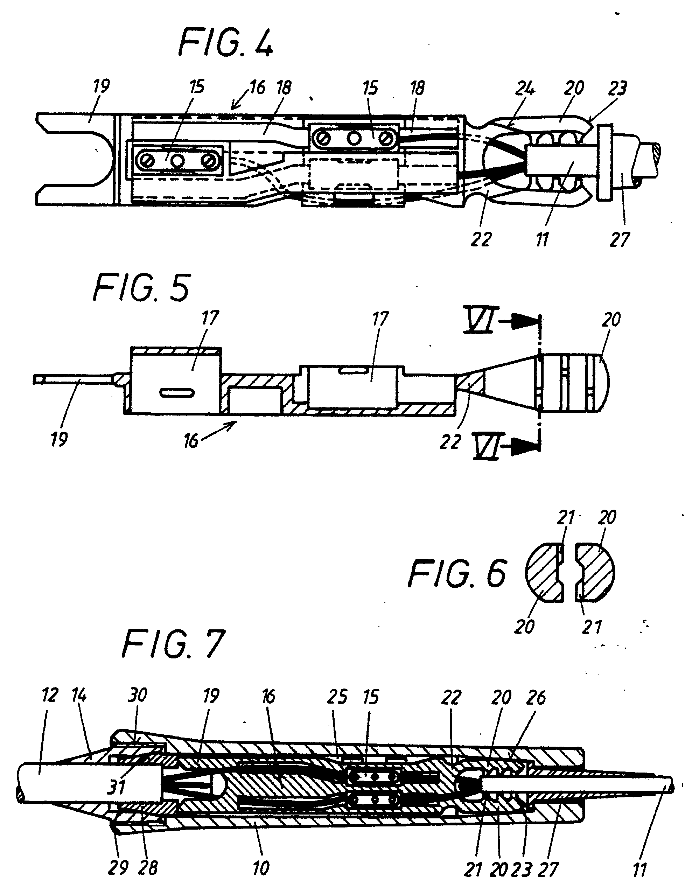

Es sei hier weiter noch erwähnt, daß zwischen den eigentlichen Klemmbacken und dem verdünnten Werkstoffbereich die Klemmbacken sich keilförmig verjüngen. Hierdurch besteht die Möglichkeit, die Zuleitungen sicher im Querschnitt der Halterung zu den Verbindungsklemmen zu führen, da hierdurch, wie Fig. 2 zeigt, Führungen 24 für die Zuleitungen entstehen. Wie Fig. 4 zeigt, sind diese Führungen 24 auf beiden Seiten der Klemmbacken.

Gemäß Fig. 5 sind die besonderen Aufnahmen für die Verbindungsklemmen der Halterung nochmals deutlich dargestellt.

Wie Fig. 6 zeigt, sind bei dem vorliegenden Ausführungsbeispiel zwei Klemmbacken vorgesehen. Diese Klemmbacken sind auf der dem Anschlußkabel zugewandten Seite schalenförmig ausgebildet, so daß mittig das Anschlußkabel über Klemmbacken und Rippen festgelegt werden kann.

Gemäß Fig. 7 wird nun auf die Befestigung eingegangen.

Wie zu erkennen ist, weist der Handgriff 10 eine Klemmkammer 25 auf. Diese Klemmkammer ist mit einem konischen Abschnitt 26 versehen, der im Bereich der Einführung des Anschlußkabels liegt. Es sei hier noch festgestellt, daß zur Verhinderung von Knickstellen am Kabel das Kabel mit einer Einführungstülle 27 versehen ist.

Zur Montage wird nun wie folgt vorgegangen.

Die Halterung 16 mit Verbindungsklemmen 15 sowie Anschlußkabel 11 wird in die Klemmkammer 25 eingeschoben und zwar so weit, bis die Klemmbacken 20 mit dem konischen Abschnitt 26 in Verbindung treten können. Sobald dies der Fall ist, wird über den konischen Abschnitt 26 sowie die Schrägfläche 23 der Klemmbacken 20 die Klemmbacken gegen das Anschlußkabel gedrückt, derart, daß eine reibschlüssige Verbindung zwischen Klemmbacken und Anschlußkabel entsteht. Je weiter die Halterung in die Kammer geschoben wird, desto fester wird die reibschlüssige Verbindung.

Am anderen Ende wird ein konisches Befestigungsteil 28 auf das gabelförmige Ende 19 der Halterung aufgesetzt. Dieses konische Befestigungsteil weist federnde Laschen 29 auf, die bereichsweise das Heizelement 12 umgreifen. Hierbei besteht der Werkstoff der konischen Laschen aus einem Werkstoff mit hoher Temperaturfestigkeit.

Im Bereich des Heizelementes 12 ist die Klemmkammer 25 des Handgriffes 10 mit einem Gewinde 30 versehen. Dieses Gewinde nimmt das Schraubteil 14 auf. Über konische Flächen 31 des Schraubteiles 14 können die federnden Laschen 29 zur Halterung gegen das Heizelement gedrückt werden.

Beim Aufsetzen des konischen Befestigungsteiles auf das gabelförmige Ende 19 kann die Halterung mit Klemmbacken tiefer in die Klemmkammer eingedrückt werden, wodurch die Klemmbacken weiter auf das Anschlußkabel bewegt werden. Es sei hier noch nachgetragen, daß das gabelförmige Ende der Halterung in einen Schlitz des konischen Befestigungsteiles eingreift, und zwar derart, daß einer Befestigungsbewegung durch die Schraubhülse keine Drehung vom Befestigungsteil und Halterung auftritt.

Weiter sei hier noch nachgetragen, daß die Klemmbacken unter Vorspannung an dem Anschlußkabel angreifen.

Wie schon erwähnt, wird zur Montage das Anschlußkabel in die Klemmkammer eingeführt. Diese Einführbewegung kann, sobald das eine Ende des Kabels die Klemmkammer wieder verläßt, durch Ziehen an diesem Ende weiter verstärkt werden. Durch die Vorspannung sowie durch den konischen Abschnitt wird bei einem Zug am Kabel die Klemmbacke immer weiter gegen das Kabel angepreßt. Je höher der Zug ist desto fester greift die Klemmbacke an dem Kabel an. Dadurch, daß die Schrägfläche 23 der Klemmbacke gegen den konusförmigen Abschnitt liegt, tritt eine Art Selbstklemmung, selbst wenn die Halterung der Verbindungsklemmen etwas von dem konusförmigen Abschnitt weg bewegt wird, bei einem Zug am Kabel die Zugentlastung wieder voll in Kraft, da die Klemmbacken gegen den konischen Abschnitt gezogen werden, wodurch sie immer fester gegen das Kabel bewegt werden.

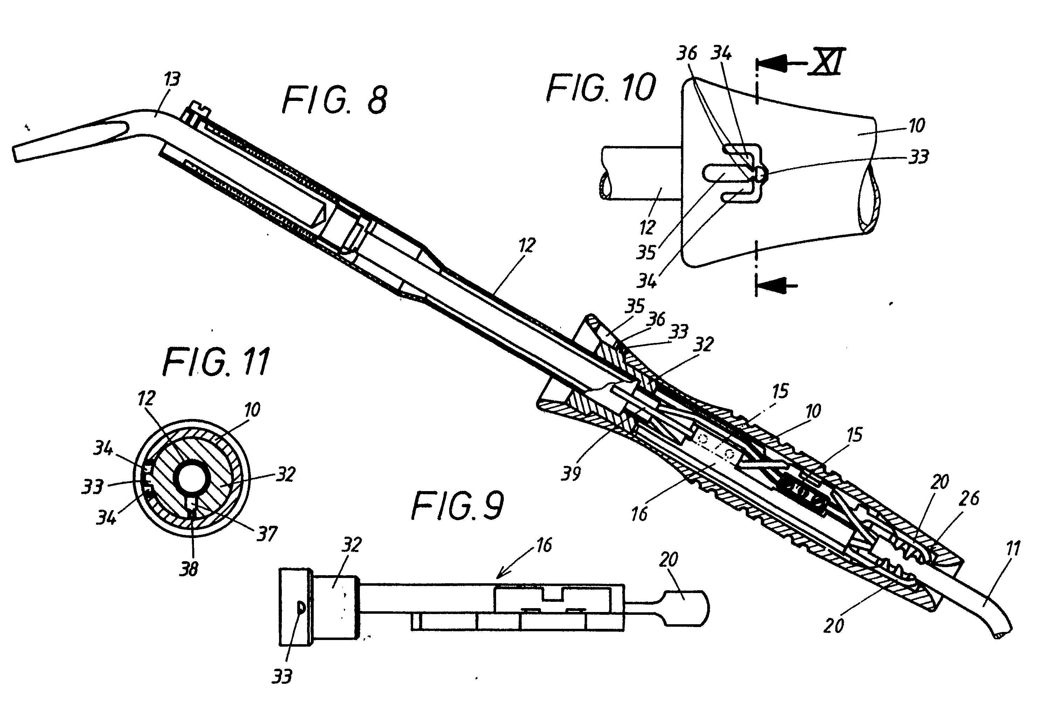

Das in Fig. 8 dargestellte Ausführungsbeispiel eines Lötkolbens weist einen ähnlichen Aufbau wie das vorbeschriebene Ausführungsbeispiel auf. Es wird daher insoweit auf das bisherige Ausführungsbeispiel Bezug genommen. Zur Festlegung der Halterung 16 ist nunmehr ein Befestigungsteil 32 vorgesehen, das an der Halterung - wie die Klemmbacken 20 - angeformt ist. Dieser Befestigungsteil weist einen Vorsprung 33 auf, der in eine Ausnehmung 35 des Handgriffes 10 eingreift. Hierbei erfolgt der Eingriff derart, daß der Befestigungsteil mit Halterung und Klemmbacke in der Kammer 25 des Handgriffes 10 sicher festgelegt ist. Der Befestigungsteil haltert das Heizelement 12 des Lötkolbens durch Preßsitz. Es sei hier der Vollständigkeit halber bemerkt, daß das Heizelement aus dem eigentlichen Heizkern besteht sowie einer metallischen Hülse. Diese metallische Hülse ist in dem Befestigungsteil 32 befestigt. Die Lötspitze 13 ist durch eine Schraubverbindung an dem Heizelement befestigt.

Es sei weiter hier noch vorgetragen, daß der Befestigungsteil einen Schlitz 37 trägt, der eine Rippe 38 des Handgriffes 10 aufnimmt. Durch diese Maßnahme wird sichergestellt, daß der Befestigungsteil 32 und somit Heizelement 12,Halterung 16 und Klemmbacken in der Klemmkammer nicht verdreht werden können. Der Schlitz 37 hat noch die weitere Aufgabe, er nimmt bereichsweise eine Führungszunge 39 auf, die einerseits, beispielsweise durch Schweißen am Heizelement 12,befestigt ist und die mit ihrem anderen Ende in einer Verbindungsklemme 15 befestigt ist. Diese Führungszunge ist aus Metall. Sie hat die Aufgabe einerseits,eine leitende Verbindung zwischen einer der Verbindungsklemmen und dem Heizelement herzustellen, und zwar aus Erdungszwecken, zum anderen soll damit sichergestellt werden, daß das Heizelement nicht aus dem Befestigungsteil 32 herausgezogen werden kann.

Zur lösbaren Festlegung des Heizelementes und der Halterung am Handgriff weist die Ausnehmung 35 zwei federnde Laschen 34 auf. Diese federnden Laschen tragen an ihrem freien Ende jeweils einen Gegenvorsprung. Dieser Gegenvorsprung 36 liegt hinter dem Vorsprung des Befestigungsteiles. Durch Einsetzen eines Schraubendrehers in die Ausnehmung 35 können die federnden Laschen soweit auseinanderbewegt werden, daß derVorsprung 33 frei von den beiden Gegenvorsprüngen 36 kommt.

Zur Montage sei folgendes bemerkt. Zunächst wird das Heizelement durch Preßsitz an dem Befestigungsteil 32 gehaltert. Es folgt dann die anschließende Verdrahtung mit dem Anschlußkabel. Hierbei können die einzelnen Zuleitungen an nicht näher beschriebenen Vorsprüngen an der Halterung 16 festgelegt werden. Sobald die Verdrahtung erfolgt ist, wird die Halterung mit dem Heizelement in die Klemmkammer 25 eingeschoben. Hierbei gelangen die Klemmbacken 20 schließlich gegen den konischen Abschnitt 26, so daß sie aufeinander zu bewegt werden und immer fester das Anschlußkabel 11 haltern. Die Einfuhrbewegung findet so lange statt, bis der Vorsprung 33 hinter den beiden Gegenvorsprüngen 36 zu liegen kommt. Sobald dies geschehen ist, ist die Montage abgeschlossen.

Die Zugentlastung ist voll in Funktion und der Lötkolben ist gebrauchsfertig.

Weiter kann der als Klemmteil ausgebildete konische Abschnitt auch anders gestaltet werden, beispielsweise nur als Vorsprung, der mit der Schrägfläche am freien Ende der Klemmbacke in Verbindung tritt. Diese wird bei einer Bewegung der Halterung in die Klemmkammer hinein gegen das Kabel gepreßt. Statt der gezeigten zwei Klemmbacken kann die Halterung auch mehrere Klemmbacken aufweisen.

Bezugszeichenliste:

| 10 | Handgriff |
| 11 | Anschlußkabel |
| 12 | Heizelement |
| 13 | Lötspitze |
| 14 | Schraubteil |
| 15 | Verbindungsklemme |
| 16 | Halterung |
| 17 | Aufnahme an 16 |
| 18 | Kanäle an 16 |
| 19 | gabelförmiges Ende von 16 |
| 20 | Klemmbacke |
| 21 | Rippen an 20 |
| 22 | verdünnter Werkstoffbereich |
| 23 | Schrägfläche an 20 |
| 24 | Führungen |
| 25 | Klemmkammer |
| 26 | konischer Abschnitt |
| 27 | Einführungstülle |
| 28 | konischer Befestigungsteil |
| 29 | federnde Lasche |
| 30 | Gewinde |
| 31 | konische Flächen von 28 |
| 32 | Befestigungsteil |
| 33 | Vorsprung |
| 34 | federnde Laschen |
| 35 | Ausnehmung |
| 36 | Gegenvorsprung |
| 37 | Schlitz |
| 38 | Rippe |
| 39 | Führungszunge |

**Patentansprüche**

1.  Elektrischer Lötkolben, mit einem Heizelement (12) mit einem Anschlußkabel (11), mit einem Handgriff (10), der in seinem Inneren eine Kammer (25) aufweist, in die das Heizelement (12) und das Anschlußkabel (11) bereichsweise zur Befestigung eingeführt sind und in der durch Zwischenwände (16) voneinander getrennt die einzelnen Anschlüsse zur elektrisch leitfähigen Verbindung zwischen Heizelement (12) und Anschlußkabel (11) liegen und mit wenigstens einer schwenkbaren Klemmbacke (20), die an der Zwischenwand (16) angeformt ist, wobei das Anschlußkabel (11) gegen ein Herausziehen aus der Kammer (25) durch ein als Zugentlastung dienendes Klemmteil (26) und der Klemmbacke (20) reibschlüssig gehalten ist, und das Heizelement (12) über eine Befestigungseinrichtung (14,28 bis 30;32 bis 34,36) am Handgriff (10) lösbar festgelegt ist,

**dadurch gekennzeichnet,**

daß die Zwischenwände (16) als eine Halterung (16) für Verbindungsklemmen (15) ausgebildet sind, an denen die Zuleitungen von Heizelement (12) und Anschlußkabel (11) zur Herstellung einer elektrisch leitfähigen Verbindung befestigt sind, daß an der Halterung (16) mehrere Klemmbacken (20) angeformt sind, die gleichmäßig um das Anschlußkabel (11) herum verteilt angeordnet sind, daß über die Befestigungseinrichtung (14,28 bis 30;32 bis 34,36) Heizelement (12) und Halterung (16) mit Klemmbacken (20) in der Klemmkammer (25) mit einer Verdrehsicherung festgelegt sind und daß die Befestigungsvorrichtung (14,28 bis 30;32 bis 34,36) das Heizelement (12) und die Halterung (16) durch ein Gewinde (30) oder durch wenigstens eine federnde Lasche (34) lösbar am Handgriff (10) befestigt.

2. Elektrischer Lötkolben nach Anspruch 1, dadurch gekennzeichnet, daß die Verdrehsicherung zwischen Halterung (16) und Handgriff (10) als ein gabelförmiges Ende (19) der Halterung in einem Schlitz des konischen Befestigungsteiles (28) eingreift.

3. Elektrischer Lötkolben nach Anspruch 1 oder 2, dadurch gekennzeichnet, daß die Klemmbacken (20) unter Vorspannung an dem Anschlußkabel (11) angreifen.

4. Elektrischer Lötkolben nach einem der Ansprüche 1 bis 3, dadurch gekennzeichnet, daß die Klemmbacken (20) über einen als Biegestelle ausgebildeten, verdünnten Werkstoffbreich (22) verschwenkbar gelagert sind.

5. Elektrischer Lötkolben nach einem der Ansprüche 1 bis 4, dadurch gekennzeichnet, daß das Klemmteil (28) als Vorsprung an der Innenwandung der Kammer (25) ausgebildet ist.

6. Elektrischer Lötkolben nach einem der Ansprüche 1 bis 5, dadurch gekennzeichnet, daß an der Berührstelle zwischen Klemmbacke (20) und Klemmteil (26) an Klemmbacke und/oder Klemmteil eine Schrägfläche (23) vorgesehen ist, durch die die Klemmbacke (20) auf das Anschlußkabel (11) schwenkbar ist.

7. Elektrischer Lötkolben nach einem der Ansprüche 1 bis 6, dadurch gekennzeichnet, daß die Klemmbacke (20) und/oder die Rippen (21) schalenförmig das Anschlußkabel (11) bereichsweise umgreifen.

8. Elektrischer Lötkolben nach einem der Ansprüche 1 bis 7, dadurch gekennzeichnet, daß ein Befestigungsteil (32) der Befestigungseinrichtung für das Heizelement an der Halterung (16) angeformt ist.

9. Elektrischer Lötkolben nach einem der Ansprüche 1-8 dadurch gekennzeichnet, daß das Heizelement (12) durch Preßsitz an dem Befestigungsteil gehalten ist.

10. Elektrischer Lötkolben nach einem der Ansprüche Ansprüche 1 bis 9, dadurch gekennzeichnet, daß der Befestigungsteil (32) der Befestigungseinrichtung einen Vorsprung (33) trägt, der in eine Ausnehmung (35) des Handgriffes (10) zur Lagesicherung von Befestigungsteil (32), Halterung (16) und Klemmbacken (20) hinter einen Gegenvorsprung (36) zu liegen kommt.

11. Elektrischer Lötkolben nach einem der Ansprüche 1-10 gekennzeichnet, daß in der Ausnehmung (35) des Handgriffes (10) zwei federnde Laschen (34) vorgesehen ist, die den Gegenvorsprung (36) tragen.

12. Elektrischer Lötkolben nach einem der Ansprüche 1 bis 11 , dadurch gekennzeichnet, daß der Befestigungsteil (32) einen in Einführichtung der Halterung (16) in die Kammer (25) verlaufenden Schlitz (37) aufweist, in den eine Rippe (38) des Handgriffen (10) eingreift.

13. Elektrischer Lötkolben nach einem der Ansprüche 1 bis 12, dadurch gekennzeichnet, daß der Schlitz (37) eine am Heizelement (12) festgelegte Führungszunge (39) aufnimmt, deren freies Ende in eine der Verbindungsklemmen (15) der Halterung (16) befestigbar ist.

**Claims**

1. An electrical soldering i-ron including a heating element (12), a connecting cable (11), a handle (10), having a chamber (25) inside, in which the heating element (12) and the connecting cable (11) are regionally introduced for respective attachment, and in which, separated by partition walls (16) the individual connectors are arranged for electrically conducting connection between the heating element (12) and the connecting cable (11), and with at least one pivotable clamping jaw (20) integral with the partition wall (16), wherein the connecting cable (11) is frictionally engaged against withdrawal from the chamber (25) by a clamping part (26) serving as tension relief and from the clamping jaw (20), and the heating element (12) is releasably fixed via a fixing arrangement (14,28 to 30;32 to 34, 36) to the handle (10),

**characterized in**

that the partition walls (16) are designed as a mounting (16) for the connecting means (15) to which the conductors of heating element (12) and connecting cable (11) are connected for establishing an electrically conductive connection, that the mounting (16) has integrally formed therewith several clamping jaws (20) which are regularly distributed around the connecting cable (11), that via the fixing arragement (14, 28 to 30; 32 to 34, 36) the heating element (12) and the mounting (16) are fixedly defined in the clamping chamber (25) by a torsion safety device and that the fixing arrangement (14, 28 to 30; 32 to 34, 36) releasably secures the heating element (12) and the mounting (16) by a threading (30) or at least by a flexible strap (34) to the handle (10).

2. An electrical soldering iron as claimed in the Claim 1,
characterized in
that the torsion safety device between the mounting (16) and the handle (10) engages in a slot of the conical fixing part (28) as a fork-shaped end (19) of the mounting.

3. An electrical soldering iron as claimed in the Claim 1 or 2,
characterized in
that the clamping jaws (20) are initially tensioned to engage at the connecting cable (11).

4. An electrical soldering iron as claimed in any one of the Claims 1 to 3,
characterized in
that the clamping jaws (20) are pivotally supported via a restricted material area (22) designed as bending portion.

5. An electrical soldering iron as claimed in any one of the Claims 1 to 4,
characterized in

that the clamping part (28) is designed as a projection on the inner wall of the chamber (25).

6. An electrical soldering iron as claimed in any one of the Claims 1 to 5,
characterized in
that at the contact surface between clamping jaw (20) and clamping part (26) there is provided an inclined surface (23) either on the clamping jaw and/or clamping part, by which the clamping jaw (20) can be pivoted onto the connecting cable (11).

7. An electrical soldering iron as claimed in any one of the Claims 1 to 6,
characterized in
that the clamping jaw (20) and/or the ribs (21) regionally grip around the connecting cable (11) in cup-shaped manner.

8. An electrical soldering iron as claimed in any one of the Claims 1 to 7,
characterized in
that a fixing part (32) of the fixing arrangement for the heating element is integral with the mounting (16).

9. An electrical soldering iron as claimed in any one of the Claims 1 to 8,
characterized in
that the heating element (12) is in press-fit engagement with the fixing part.

10. An electrical soldering iron as claimed in any one of the Claims 1 to 9,
characterized in
that the fixing part (32) of the fixing arrangement has a projection (33) which engages in a recess (35)of the handle (10) behind a counter-projection (36) for positional securement of the fixing part (32), the mounting (16) and the clamping jaws (20).

11. An electrical soldering iron as claimed in any one of the Claims 1 to 10,
characterized in
that in the recess (35) of the handle (10) there are provided two flexible straps (34) which carry the counter-projection (36).

12. An electrical soldering iron as claimed in any one of the Claims 1 to 11,
characterized in
that the fixing part (32) has a slot (37) extending in the direction of introduction of the mounting (16) into the chamber (25), into which a rib (38) of the handle (10) engages.

**13.** An electrical soldering iron as claimed in any one of the Claims 1 to 12, characterized in that the slot (37) receives a guide tongue (39) positioned on the heating element (12), having its free end attachable in one of the connecting clamps (15) of the mounting (16).

**Revendications**

**1.** Fer à souder électrique comportant un élément chauffant (12), un câble de raccordement (11), une poignée (10) renfermant une cavité (25) dans laquelle pénètrent partiellement, pour leur fixation, l'élément chauffant (12) et le câble de raccordement (11) et qui loge les raccords individuels assurant la liaison électrique entre l'élément chauffant (12) et le câble de raccordement (11), ces raccords étant isolés les uns des autres par des cloisons (16), et au moins une mâchoire de serrage (20) basculable venant de moulage avec la cloison (16), le câble de raccordement (11) étant empêché par frottement de sortir de la cavité (25) par une pièce de serrage (26) de soulagement de traction et la mâchoire de serrage (20), et l'élément chauffant (12) étant fixé de façon amovible à la poignée (10) par un dispositif de fixation (14, 28 à 30 ; 32 à 34, 36), caractérisé en ce que les cloisons (16) forment un support (16) pour des serre-fils (15) auxquels sont fixés les fils d'alimentation de l'élément chauffant (12) et du câble de raccordement (11) pour assurer une liaison électrique, en ce que plusieurs mâchoires de serrage (20) viennent de moulage avec le support (16) et sont régulièrement réparties autour du câble de raccordement (11), en ce que l'élément chauffant (12) et le support (16), avec les mâchoires de serrage (20), sont fixés dans la cavité de serrage (25) avec un dispositif anti-torsion, par le dispositif de fixation (14, 28 à 30 ; 32 à 34, 36) et en ce que celui-ci assure la fixation amovible, à la poignée (10), de l'élément chauffant (12) et du support (16) par un filetage (30) ou par au moins une languette élastique (34).

**2.** Fer à souder électrique selon la revendication 1, caractérisé en ce que le dispositif anti-torsion entre le support (16) et la poignée (10), vient en prise dans une fente de la partie de fixation conique (28), en tant qu'extrémité (19) en forme de fourche du support.

**3.** Fer à souder électrique selon la revendication 1 ou 2, caractérisé en ce que les mâchoires de serrage (20) viennent en prise par précontrainte sur le câble de raccordement (11).

**4.** Fer à souder électrique selon l'une des revendications 1 à 3, caractérisé en ce que les mâchoires de serrage (20) sont supportées de manière basculable par une région (22) formant zone de flexion.

**5.** Fer à souder électrique selon l'une des revendications 1 à 4, caractérisé en ce que la pièce de serrage (28) forme une saillie sur la paroi intérieure de la cavité (25).

**6.** Fer à souder électrique selon l'une des revendications 1 à 5, caractérisé en ce que, dans la zone de contact entre la mâchoire de serrage (20) et la partie de serrage (26), la mâchoire de serrage et/ou la partie de serrage présentent une surface inclinée (23) qui permet de basculer la mâchoire de serrage sur le câble de raccordement (11).

**7.** Fer à souder électrique selon l'une des revendications 1 à 6, caractérisé en ce que la mâchoire de serrage (20) et/ou les nervures (21) viennent en prise autour du câble de raccordement (11) à la manière d'une coquille par contact partiel avec celui-ci.

**8.** Fer à souder électrique selon l'une des revendications 1 à 7, caractérisé en ce qu'une pièce de fixation (32) du dispositif de fixation de l'élément chauffant vient d'un seul tenant avec le support (16).

**9.** Fer à souder électrique selon l'une des revendications 1 à 8, caractérisé en ce que l'élément chauffant (12) est maintenu sur la pièce de fixation par emboîtement à force.

**10.** Fer à souder électrique selon l'une des revendications 1 à 9, caractérisé en ce que, pour maintenir en place la pièce de fixation (32), le support (16) et les mâchoires de serrage (20), la pièce de fixation (32) du dispositif de fixation porte une saillie (33) qui vient se placer dans un évidement (35) de la poignée (10), derrière une butée (36).

**11.** Fer à souder électrique selon l'une des revendications 1 à 10, caractérisé en ce que deux languettes élastiques (34), qui portent la butée (36), sont prévues dans l'évidement (35) de la poignée (10).

**12.** Fer à souder électrique selon l'une des revendications 1 à 11, caractérisé en ce que la pièce de fixation (32) comprend une fente (37) qui s'étend dans la direction d'introduction du support (16) dans la cavité (25) et dans laquelle une nervure (38) de la poignée (10) vient en prise.

13. Fer à souder électrique selon l'une des revendications 1 à 12, caractérisé en ce que la fente (37) reçoit une lame conductrice (39) fixée à l'élément chauffant (12) et dont l'extrémité libre est conçue pour pouvoir être fixée dans l'un des serre-fils du support (16).

*FIG.1*

*FIG.2*

*FIG.3*

## FIG. 4

## FIG. 5

## FIG. 6

## FIG. 7

FIG. 8

FIG. 10

FIG. 11

FIG. 9

13

36  34  XI

10

33

12

35

34

12

35  36  33  32

15

10

15

39

16

20

26

20

20

11

12  10

34

33

32

34

37

38

32

16

20

33

EP 0 251 271 B1

12